# EUROPÄISCHE PATENTSCHRIFT

(11) **EP 0 315 122 B1**
(45) Veröffentlichungstag und Bekanntmachung des Hinweises auf die Patenterteilung: **22.09.1993**
(21) Anmeldenummer: 88118176.2
(22) Anmeldetag: 01.11.1988
(51) Int. Cl.: C22C 19/05

(54) **Verwendung von Nickel enthaltenden Legierungen und ihre Herstellung**
Use of nickel-containing alloys and process for their manufacture
Application d'alliages contenant du nickel et leur fabrication

(30) Priorität: 04.11.1987 DE 3737361
(43) Veröffentlichungstag der Anmeldung: 10.05.1989
(73) Patentinhaber: Deutsche Forschungsanstalt für Luft- und Raumfahrt e.V., 51126 Köln (DE)
(72) Erfinder: Fritscher, Klaus, Dr., D-5000 Köln 91 (DE)
(74) Vertreter: von Kreisler, Alek, Dipl.-Chem.

(56) Entgegenhaltungen:
- EP-A- 0 025 263
- DE-A- 3 246 507
- FR-A- 2 205 578

## Beschreibung

Die Erfindung betrifft die Verwendung von Legierungen, die als essentiellen Bestandteil Nickel neben anderen Metallen enthalten als Werkstoff, der auf der Grundlegierung auf Basis von Nickel oder Titan aufgebracht worden ist, und Verfahren zur Herstellung derartiger spezieller Legierungen.

Es ist seit langer Zeit bekannt, daß in Hochleistungs-Verbrennungsmotoren, beispielsweise für Flugzeuge, der Verbrennungsablauf dadurch günstig beeinflußt werden kann, daß man die einzelnen Brennräume durch Wärmebarriereschichten gegen die umliegenden Materialien isoliert. Derartige Wärmebarriereschichten bestehen üblicherweise aus oxidischen Werkstoffen wie beispielsweise Magnesiumzirkonat und/oder Zirkonoxid. Im Leistungsgrenzbereich wird der Wirkungsgrad des Verbrennungsprozesses deutlich erhöht. Außerdem trägt die Beschichtung der metallischen Materialien mit oxidischen Wärmebarriereschichten dazu bei¸ Spannungen im thermisch belasteten Material zu verringern.

Probleme bereitete in diesem Zusammenhang immer wieder die Verbindung zwischen der jeweiligen oxidischen Wärmebarriereschicht und dem metallischen Material. Diese lagen einerseits darin, daß üblicherweise Keramiken und andere oxidische Werkstoffe andere thermische Ausdehnungskoeffizienten (TAK) α als Metalle oder Metallegierung besitzen. Diesem Nachteil könnte durch geeignete Auswahl von Materialien mit vergleichbaren oder gleichen thermischen Ausdehnungskoeffizienten Rechnung getragen werden.

Andererseits war zu berücksichtigen, daß keramische Werkstoffe sogenannte "Anionleiter" sind, die O²⁻-Ionen weiterleiten und auch an die benachbarte metallische Schicht abgeben. Diese würde dadurch oxidiert. Eine derartige Oxidationsreaktion ist jedoch immer mit einem Volumenzuwachs verbunden, und es bestand immer die Gefahr, daß die Wärmebarriereschicht von der metallischen Oberfläche "abgesprengt" würde.

Dieser Problematik versuchte man dadurch zu begegnen, daß man zwischen oxidischer Wärmebarriereschicht und metallischem Substrat eine Zwischenschicht vorsah, die aus einem oder mehreren, miteinander legierten Metallen bestand und im thermischen Ausdehnungskoeffizienten an das Substratmetall und die oxidische Wärmebarriereschicht angepaßt war. Derartige Zwischenschichten stellten eine bedeutende Verbesserung gegenüber den durch Dehnfugensegementierung unmittelbar mit den metallischen Substraten verbundenen oxidischen Wärmebarriereschichten dar und stellten eine optimale Abstimmung der thermischen Ausdehnungskoeffizienten der beiden metallischen Schichten aufeinander sicher. Die gewünschte Diffusionsstabilität wurde jedoch dadurch nicht erreicht. Bestandteile der Zwischenschichtlegierungen, diffundierten in die Substratmetallschicht und veränderten dadurch deren Eigenschaften in unerwünschter Weise. Dies führte zur Porosität des metallischen Werkstoffs und war für praktische Zwecke nicht akzeptabel. Derartige, aus dem metallischen Substrat, einer metallischen Zwischenschicht und einer durch Plasmaspritzen aufgebrachten oxidischen Wärmebarriereschicht bestehende Systeme werden beispielsweise in "Ceramic Bulletin" 60, 555 (1981) und a.a.O. 61, 256 (1982) beschrieben.

FR-A-2 205 578 beschreibt eine Ni-Legierung zur Verwendung als Überzug auf Superlegierungen bestehend aus: 12,5 bis 20 % Cr, 2 bis 10 % Si, 2 bis 8 % Al, 0 bis 10 % Ti und Rest Nickel. Legierungen die neben Silicium auch Titan enthalten, weisen jedoch Chromgehalte von 15 Gew.-% auf. Aus DE-A-32 46 507 ist ein Verfahren zur Herstellung von Überzügen aus einer Nickellegierung mit (in Atomprozent) 51 bis 72 % Nickel, 18 bis 28 % Chrom, 1 bis 3 % Titan, 1 bis 6 % Silicium, 8 bis 12 % Aluminium (= in Gew.-%: 58,9 bis 77,5 % Ni, 17,2 bis 28,6 % Cr, 0,9 bis 2,8 % Ti, 0,5 bis 3,3 % Si und 4 bis 6,4 % Al) bekannt, wonach das Substrat zunächst gereinigt wird, mit einem Sandstrahlgerät aufgeraut wird, wonach der durch Plasmaspritzen aufgebrachte Überzug in einer sauerstofffreien Atmosphäre wärmebehandelt wird. Aus EP-A-0 025 263 ist die Herstellung von Überzügen auf Nickelsubstraten durch Plasmaspritzen, Eletronenstrahl-Verdampfung, Elektroabscheidung, Sputtern etc. bekannt. Diese Überzüge dienen als Hochtemperaturschutzschicht beispielsweise bei Bauelementen von Gasturbinen. Sie werden vor allem auf Lauf- und Leitschaufeln sowie auf Wärmestausegmente von Gasturbinen aufgetragen. Die Legierungen des Basiswerkstoffes umfassen wenigstens 8 bis 12 Atomprozent Aluminium und 18 bis 28 Atomprozent Chrom. Der restliche Anteil der Legierung besteht in diesem Fall aus Nickel. Silicium und Titan können dem Basiswerkstoff als Zusätze beigemischt werden. So kann 1 bis 6 Atomprozent Silicium und 1 bis 3 Atomprozent Titan in diesen Legierungen enthalten sein.

Mit den im Stand der Technik beschriebenen Wärmebarriereschichten war es jedoch bisher nicht möglich, sowohl das Erfordernis aneinander angepaßter thermischer Ausdehnungskoeffizienten des metallischen Substrats und der Wärmebarriereschicht zu erfüllen, als auch sicherzustellen, daß die Wärmebarriereschichten das metallische Substrat gegen das Eindringen von schädlichen Fremdstoffen schützen, wobei unter letzteren sowohl Anionen aus der Umgebung bzw. den heißen Abgasen bzw. der oxidischen Keramikschicht als auch Metalle aus der Zwischenschicht verstanden werden. Aufgrund der maschinenbautechnischen Erfordernisse, gerade im Hochleistungsbereich stärker belastbare und längerlebige Materialien zur Verfügung zu stellen, bestand jedoch ein starkes Bedürfnis, metallische Substrate mit verbesserten Wärmebarriereschichten zu versehen und diese dadurch noch breiter einsetzbar zu machen. Neben dem Erfordernis, die den heißen Gasen unmittelbar ausgesetzte oxidische Schicht zu verbessern, wurde ein Entwicklungsschwerpunkt darin gesehen, die Zwischenschicht so zu verbessern, daß sie nicht nur im Ausdehnungskoeffizienten sowohl mit dem metallischen Substrat als auch mit der oxidischen Schicht übereinstimmt, sondern auch für eine ausreichende Diffusionsstabilität sorgt und selbst so beschaffen ist, daß keine Bestandteile der Zwischenschicht-Legierungen in das metallische Substrat eindiffundieren und dessen Eigenschaften dadurch in unerwünschter Weise ändern.

Überraschenderweise wurde dieses Erfordernis dadurch erreicht, daß man Werkstoffe, die Nickel als Hauptkomponente enthalten entwickelte, die weder für unerwünschte Ionen der Keramikschicht durchlässig sind noch Legierungsbestandteile an das Metallsubstrat abgeben noch bei thermischer Belastung zu einer Ermüdung der Metall-Keramik-Verbindung neigen. Diese Werkstoffe können in vorteilhafter Weise sowohl zur Verbindung von keramischen Anionleitern mit Nickelbasis- oder Titanbasislegierungen als auch als Heißgaskorrosionsschutzschicht auf derartigen Basislegierungen verwendet werden.

Die Erfindung betrifft die Verwendung von Legierungen, gemäß Anspruch 1. Bevorzugte Ausführungsformen sind den Unteransprüchen zu entnehmen.

Nach einer bevorzugten Ausführungsform der vorliegenden Erfindung verwendet man diesen Werkstoff zur Verbindung von keramischen Anionleitern mit Substraten auf Nickelbasislegierungen oder Titanbasislegierungen, insbesondere als Haftschicht für keramische Schutzschichten, die als Wärmebarriereschichten dienen, auf metallischen Substraten oder Cermet.

Nach einer weiteren bevorzugten Ausführungsform der vorliegenden Erfindung verwendet man diesen Werkstoff als Heißgaskorrosionsschutzschicht.

Die Erfindung betrifft außerdem ein Verfahren zur Herstellung von Legierungen gemäß Anspruch 4. Bevorzugte Ausführungsformen sind den davon abhängigen Ansprüchen zu entnehmen.

Gemäß der vorliegenden Erfindung werden metallische Werkstoffe bevorzugt als Substrate verwendet, da sie sich in den in Frage kommenden Bereichen der Hochleistungs-Technologie bewährt haben. Es kommen jedoch - wie später beschrieben - auch Cermets als Werkstoffe in Frage. Darunter werden Verbindungen verstanden, die ein physikalisches Gemenge aus metallischen und keramischen Komponenten darstellen, die z.B. durch Heißpressen zu einem Verbundwerkstoff mit neuen Eigenschaften synthetisiert werden.

Die erfindungsgemäß als Werkstoff verwendeten Legierungen enthalten - wie auch aus dem Stand der Technik bekannte Wärmebarriere-Beschichtungen - Nickel als Hauptbestandteil. Weitere, vom Grundsatz her auch für schon bekannte Zwischenschichten von Wärmebarriereschichten verwendete Metalle sind Chrom und Aluminium. Von bekannten Legierungen für den genannten Zweck unterscheiden sich die vorliegenden Legierungen jedoch durch ihren Gehalt an Titan und Silicium.

Gegebenenfalls ist es möglich, daß die erfindungsgemäß als Werkstoff verwendeten Legierungen neben den genannten fünf Metallen auch noch andere übliche Legierungsbestandteile enthalten. Dies können beispielsweise Hafnium, Tantal, Wolfram und/oder Seltene Erden wie Yttrium, Cer und Samarium als metallische Elemente sein. Die oben angegebenen potentiellen weiteren Legierungsbestandteile können in derartigen Legierungen in Mengen von 0,1 bis 2 Gew.-% enthalten sein.

Nickel als Hauptbestandteil aufweisende Legierungen die gemäß der Erfindung als Werkstoff verwendet werden, haben einen thermischen Ausdehnungkoeffizienten α im Bereich von 12 bis 16 . 10⁻⁶ . K⁻¹ zwischen 293 und 1370 K. Der Vorteil eines Ausdehnungskoeffizienten in dem genannten Bereich ist darin zu sehen, daß derartige Legierungen optimal sowohl auf die thermischen Ausdehnungskoeffizienten der metallischen Substrate als auch der Oxidkeramiken der Wärmebarriereschichten abgestimmt werden können und es dadurch nicht zu Spannungen innerhalb der beschichteten Werkstücke bei Temperaturbelastung und/oder Temperaturwechseln kommen kann.

Bevorzugterweise zeigen Legierungen, die gemäß der Erfindung als Werkstoff verwendet werden, einen thermischen Ausdehnungskoeffizienten α, der bei 13 bis 15 . 10⁻⁶ . K⁻¹ zwischen 293 und 1370 K liegt. Sie sind damit in optimaler Weise an die Ausdehnungskoeffizienten der benachbarten Substrate bzw. Oxidkeramikschichten angepaßt.

Die Nickel als Hauptbestandteil enthaltenden Legierungen, die als Werkstoff verwendet werden, werden nach einem Verfahren hergestellt und gleichzeitig auf die Metallsubstrate aufgebracht, dessen Einzelschritte in der Mehrzahl aus dem Stand der Technik an sich bekannt sind. Der Herstellungsweg ist dadurch gekennzeichnet, daß man in einem ersten Schritt die beteiligten metallischen Bestandteile in feinverteilter Form mischt. Es werden also feinverteilte Pulver der Metalle Nickel, Chrom, Aluminium, Titan, Silicium und gegebenenfalls noch andere Legierungsbestandteile in üblichen Pulvermischern miteinander vermischt und dadurch eine gleichbleibende physikalische Mischung der späteren Legierungsbestandteile in Pulverform sichergestellt. Derartige physikalische Mischungen der einzelnen metallischen Bestandteile können in dieser Form eingesetzt werden. Sie können vorteilhafterweise durch eine Nachmahlung in Kugelmühlen in eine sogenannte "mechanisch legierte Pulverform" überführt werden. Die diesbezügliche Vorgehensweise ist an sich aus dem Stand der Technik bekannt. Es ist jedoch auch gemäß dem vorliegenden Verfahren möglich, die physikalischen Mischungen unter Temperaturerhöhung auf an sich üblichen, also schmelzmetallurgischen Wegen miteinander zu legieren und sie dadurch für die nachfolgenden Verfahrensschritte vorzubereiten.

Danach kann in einem weiteren Verfahrensschritt das Metallsubstrat, auf das die Legierungen aufgebracht werden sollen, gegebenenfalls auf an sich bekanntem Wege für die Aufbringung vorbereitet werden. Dieser Schritt ist nicht zwingend erforderlich, kann jedoch in bevorzugten Ausführungsformen des Verfahrens vorteilhaft sein, um die Haftung der Legierungen auf dem Metallsubstrat über das schon übliche gute Maß hinaus noch weiter zu verbessern. Eine solche Vorbehandlung kann beispielsweise darin bestehen, daß man die Oberfläche des Metallsubstrats mit Sandstrahlung behandelt und dadurch so aufrauht, daß die nachfolgend aufgebrachte Legierungsschicht noch besser auf dem metallischen Substrat haftet.

In einem nachfolgenden Verfahrensschritt wird entweder die im ersten Schritt erhaltene physikalische Mischung der feinverteilten Legierungskomponenten oder die nachfolgend schon erhaltene Legierung bei erhöhter Temperatur in Form einer legierten Schicht auf das Metallsubstrat aufgebracht. Dabei werden - je nach Verfahrensart - Temperaturen im Bereich von Raumtemperatur (293 K) bis 1300 K einzuhalten sein. Die jeweils aktuell einzustellende Temperatur hängt nicht nur von der Verfahrensart, sondern auch von den sonst einzuhaltenden Bedingungen, wie beispielsweise Druck, usw. ab.

Die Aufbringung der physikalischen Mischung bzw. der Legierung der einzelnen metallischen Komponenten in Form einer legierten Schicht auf das Metallsubstrat kann beispielsweise durch Aufdampfen erfolgen. Die Aufdampfung metallischer Schichten auf metallische Substrate ist aus dem Stand der Technik im Detail bekannt. Es wird dazu beispielsweise auf die oben genannten Druckschriften in "Ceramic Bulletin" verwiesen. Zur Verdampfung der Metallmischung bzw. Metallegierung werden üblicherweise Drücke im Bereich von 10⁻⁶ bis 10⁻⁸ bar eingestellt. In Abhängigkeit von der Menge und dem Verhältnis der einzelnen Legierungskomponenten zueinander bilden sich bei den jeweils einzustellenden Verfahrensbedingungen Metalldämpfe, die auf dem kühleren Metallsubstrat abgeschieden werden. Die Abscheidungsgeschwindigkeit, d.h. die Bildungsgeschwindigkeit der legierten Schicht entsprechend der Erfindung, liegt dabei im Bereich von 5 bis 20 µm/min.

Es entspricht einer weiteren, ebenfalls bevorzugten Ausführungsform des vorliegenden Verfahrens, feine Pulver der Legierungen auf an sich bekannte Art im Wege des Plasmaspritzens auf das Metallsubstrat aufzubringen. Dies kann bei niedrigem Druck (low pressure plasma spraying, LPPS) oder bei Atmosphärendruck (atmospheric plasma spraying, APS) geschehen. Es werden für diese Zwecke aus dem Stand der Technik bekannte Apparaturen eingesetzt. Die Temperaturen liegen üblicherweise bei 573 bis 1073 K (300 bis 800 °C).

Eine weitere vorteilhafte Ausführungsform des erfindungsgemäßen Verfahrens besteht darin, die feinen Pulver der Legierungen im Wege des Detonationsbeschichtens auf das Metallsubstrat aufzubringen. Dies geschieht unter den für diese Methode aus dem Stand der Technik bekannten Bedingungen.

Eine weitere vorteilhafte Ausführungsform des erfindungsgemäßen Verfahrens besteht darin, die physikalische Mischung der feinverteilten Legierungskomponenten - wie oben beschrieben - zu legieren und beispielsweise aus der so erhaltenen Legierung dünne Metallfolien herzustellen. Diese weisen eine Dicke von 50 bis 200 µm auf. Eine derartige Legierungsfolie kann dann anschließend mit Vorteil durch Diffusionsschweißen auf das Metallsubstrat aufgebracht werden. Dabei werden Temperaturen im Bereich von 1273 bis 1523 K (1000 bis 1250 °C) und ein Druck im Bereich von 20 bis 500 MPa angewendet. Dabei entsteht ebenfalls zwischen metallischem Substrat und der erfindungsgemäß Legierung ein Verbund, dessen Festigkeit die Festigkeit herkömmlicher Substrat-Schicht-Verbindungen übertrifft.

Für die Auftragung der physikalischen Mischung der feinverteilten Legierungskomponenten oder der schon legierten Komponenten in feinverteilter Form ist außer den genannten Verfahren auch jede andere, aus dem Stand der Technik bekannte Art des Auftragens metallischer Komponenten auf ein metallisches Substrat möglich und von der vorliegenden Erfindung umfaßt. Als Beispiel dafür ist beispielsweise das Aufbringen durch Flammspritzen oder Sprengplattieren zu nennen.

In einem nachfolgenden Verfahrensschritt wird die nunmehr auf das metallische Substrat aufgebrachte legierte Schicht mechanisch verdichtet und/oder geglättet. Auch dafür können die aus dem Stand der Technik üblichen Verfahren des Verdichtens und/oder Glättens angewendet werden. So ist es beispielsweise möglich, die legierte Schicht durch Glaskugel-Strahlung zu verdichten und zu glätten. Dabei werden metallische Legierungsschichten einer Dicke von 10 µm bis 50 µm mit einer hohen Dichte erhalten, die von der Zusammensetzung der Legierungsschichten im einzelnen abhängt und das metallische Substrat wirksam gegen die Eindiffusion unerwünschter Fremdionen aus der keramischen Wärmebarriereschicht schützt.

Der letzte Schritt des erfindungsgemäßen Verfahrens besteht darin, das legierungsbeschichtete Metallsubstrat einer Temperaturbehandlung in Abwesenheit von Sauerstoff zu unterwerfen. Dabei wird der Substrat-Legierungsschicht-Verbund bevorzugt einer Temperatur im Bereich von 1273 bis 1363 K (1000 bis 1090 °C) unterworfen. Um einer Oxidation der Legierungsschicht bei diesen Temperaturen vorzubeugen, ist es erforderlich, daß die Temperaturbehandlung in Abwesenheit von Sauerstoff durchgeführt wird. Die dazu erforderlichen Maßnahmen sind aus dem Stand der Technik bekannt und können beispielsweise darin bestehen, daß man die Temperaturbehandlung im Vakuum durchgeführt. Dabei wird in bevorzugten Ausführungsformen des Verfahrens die Temperaturbehandlung bei einem Druck von 10⁻¹ bis 10⁻⁴ mbar über einen Zeitraum von 1 bis 5 Stunden durchgeführt. Durch diese Temperaturbehandlung (Glühbehandlung), deren genaue Dauer von der Höhe der gewählten Temperatur und der Zusammensetzung der Legierungsschicht abhängt, gelingt es, eine Diffusionszone zwischen Substrat und Legierungsschicht sich ausbilden zu lassen, die die gute Haftung zwischen beiden Legierungen noch verbessert.

Der auf dem oben beschriebenen Wege erhaltene Metallsubstrat-Legierungs-Verbund ist damit für die Keramikbeschichtung konditioniert. Auf an sich aus dem Stand der Technik bekannten Verfahrenswegen, die nicht Gegenstand der vorliegenden Erfindung sind, werden die gewünschten Keramiken nach beliebigen Verfahren auf die Legierungs-Zwischenschicht aufgetragen. Dies kann ebenfalls durch Plasmaspritzen, Flammspritzen, Aufdampfen oder mit Hilfe Detonationskanone geschehen. Die oxidischen Keramiken, die sich in diesem Zusammenhang optimal bewährt haben, sind in bevorzugter Weise mit Yttrium teilstabilisierte Zirkonoxid-Schicht-Keramiken. Es können jedoch auch alle anderen aus dem Stand der Technik bekannten Keramiken verwendet werden, die als Wärmebarriereschichten dienen können, d.h. eine geringe Wärmeleitfähigkeit aufweisen. Die nach den bekannten Verfahren aufgebrachten Keramikschichten werden anschließend einer Glühbehandlung unterworfen, die weniger dazu dient, Spannungen abzubauen, als vielmehr dazu, die Oxidationsbeständigkeit zu verbessern. Dies wird dadurch erreicht, daß sich an der Phasengrenzfläche Metall/Keramik eine Hochtemperatur-Oxidphase ausbildet. Deswegen wird die Glühbehandlung der Keramik in oxidierender Atmosphäre, vorzugsweise bei 1273 bis 1373 K (1000 bis 1100 °C) über 0,5 bis 5 Stunden durchgeführt, wobei die genaue Dauer auch hier temperaturabhängig ist. Dazu können Gase oder Gasgemische mit mehr oder weniger großen Mengen an oxidierenden Komponenten eingesetzt werden. Als solche kommen Luft, Gemische von H₂ und H₂O, von CO und CO₂, von Luft mit einem oder mehreren der genannten Gase oder Gasgemische oder auch Luft-/Sauerstoff-Gemische in Frage. Die Dosierung der oxidierenden Anteile der Gasgemische wird danach eingestellt, wie die optimale Hochtemperatur-Oxidphase der Keramik gebildet werden soll. Derartige Angaben sind dem Stand der Technik für jeden Fachmann ohne weiteres zu entnehmen.

Die Legierungen die gemäß der Erfindung als Werkstoffe verwendet werden, die nach dem oben beschriebenen Verfahren herstellbar sind, lassen sich zum einen als Zwischenschicht für mehrschichtige Wärmebarriereschichten verwenden. Bevorzugt werden sie als Haftschichten für keramische Schutzschichten verwendet. Sie sind im für die praktische Anwendung wichtigen Temperaturbereich hinsichtlich ihres thermischen Ausdehnungskoeffizienten α sowohl an die thermischen Ausdehnungskoeffizienten metallischer Substrate als auch an die thermischen Ausdehnungskoeffizienten oxidischer Keramikschichten angepaßt. Die Ausdehnungskoeffizienten im gleichen Bereich sorgen dafür, daß die optimale Verbindung zwischen metallischem Substrat und oxidischer Wärmebarriereschicht erhalten bleibt und nicht durch unterschiedliche Ausdehnungskoeffizienten Risse auftreten, die die Funktion der Wärmebarriereschichten deutlich beeinträchtigen und zudem den Zutritt unerwünschter, beispeilsweise korrodierender oder die Schichtstruktur verändernder Stoffe, ermöglichen. Außerdem sorgen die Legierungen und damit die aus ihnen aufgebauten Zwischenschichten dafür, daß aus der oxidischen Keramikschicht keine unerwünschten Stoffe in das metallische Substrat der Nickelbasis- oder Titanbasislegierungen eindringen können. Die Diffusionsstabilität der herkömmlichen Zwischenschichten wird durch die Legierungen gemäß der Erfindung deutlich übertroffen.

Zum anderen verwendet man die erfindungsgemäß als Werkstoff verwendeten Legierungen mit Vorteil als Heißgaskorrosionsschutzschicht auf Metallsubstraten, wie beispielsweise Nickelbasis- oder Titanbasislegierungen.

Es entspricht ebenfalls dem Sinn der Erfindung, die erfindungsgemäßen Legierungen auf "Cermets" als Substrate aufzubringen. Diese verhalten sich in den vorliegend in interessierenden Bereichen ganz ähnlich wie metallische Substrate. Die erfindungsgemäß als Werkstoff verwendeten Legierungen, die nach dem beschriebenen Verfahren auf Substrate aufgebracht werden können, zeigen die oben beschriebenen Vorteile auch dann, wenn sie auf Cermets auflegiert werden: Ihre Ausdehnungskoeffizienten sind denen der benachbarten Cermetschichten bzw. Keramikschichten optimal angepaßt.

Zudem schützen sie die Substratschicht vor dem Eindringen unerwünschter, die Schichtstruktur verändernder Ionen.

Die Erfindung wird durch die nachfolgenden Beispiele näher erläutert.

### Beispiel 1

Es wurden physikalische Mischungen der Metalle hergestellt, die in der nachfolgenden Tabelle 1 mengenmäßig näher spezifiziert sind. Die Metallpulver hatten einen Teilchendurchmesser im Bereich von 50 bis 500 µm.

Die Werte für den Legierungsbestandteil Al sind dabei Mindestwerte. Sei lassen sich (zu Lasten der anderen Komponenten) um bis zu 5 Gew.-% bis auf maximal 10 Gew.-% anheben.

**Tabelle 1**

| Zusammensetzung der als Werkstoff verwendeten Legierungen gemäß der Erfindung (Gew.-%) | | | | | |
|---|---|---|---|---|---|
| Bsp. | Ni | Cr | Al | Ti | Si |
| 1a | 65,9 | 17,5 | 5,2 | 9,2 | 2,2 |
| 1b | 60,2 | 27,2 | 3,7 | 6,8 | 2,1 |
| 1c | 52,8 | 37,2 | 3,3 | 4,6 | 2,1 |

Die in Tabelle 1 angegebenen Mengen der Metalle in Pulverform wurden miteinander vermischt. Diese wurden anschließend in einem Korundtiegel unter Vakuum (10⁻⁵ mbar) aufgeschmolzen und zu Stäben vergossen. Daraus wurden zylinderförmige Probekörper hergestellt. Diese dienten zur Bestimmung des Oxidationsverhaltens und zur Herstellung von Verbundkörpern aus legiertem Substrat und legierter Diffusionsschicht (vgl. vorstehende Ausführungen zum Diffusionsschweißen).

### Beispiel 2

Die gemäß Beispiel 1 erhaltenen Legierungen, erschmolzen aus den feinverteilten Legierungskomponenten, wurden einem erneuten Schmelzprozeß und nachfolgenden, vom Korundtiegel-Boden ausgehenden Erstarrungsprozeß mit einem Temperaturgradienten von ca. 50 K/cm und einer Erstarrungsgeschwindigkeit von ca. 20 cm/h im Vakuum unterworfen, um lunkerfreie Stäbe der Legierungen mit niedrigem Gasgehalt für die nachfolgende Verdampfung zu erhalten. Danach wurden diese Legierungen bei einem Druck von 5 . 10⁻⁵ mbar auf ein Metallsubstrat mit einer Substrattemperatur von 1173 K (900 °C) und folgender Zusammensetzung aufgedampft:
61,5 Gew.-% Ni / 32,3 Gew.-% Mo / 6,2 Gew.-% Al.

Die genannte Legierung des Substrats hatte einen mittleren thermischen Ausdehnungskoeffizienten α von 13,3 . 10⁻⁶ K⁻¹ zwischen 293 K (Raumtemperatur) und 1273 K.

Der durch Aufdampfen erhaltene Substrat-Legierungs-Verbund wurde durch Glaskugelstrahlen in seinem Oberflächenbereich verdichtet und geglättet und anschließend bei einem Druck 10⁻⁵ mbar und einer Temperatur von 1353 K (1080 °C) 4 Stunden lang weiterbehandelt. Danach waren homogene legierte Zwischenschichten einer Dicke von ca. 80 µm auf dem metallischen Substrat aufgebracht.

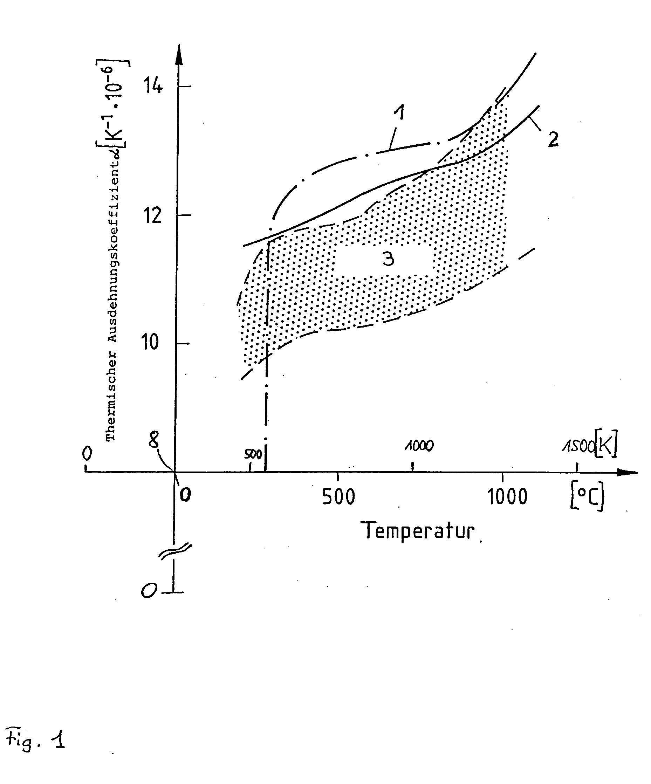

Auf diese Zwischenschichten wurde eine keramische Schicht von Zirkonoxid, das mit 7,2 Gew.-% Y₂O₃ stabilisiert war, durch Niederdruck-Plasmaspritzen bei 40 mbar Argondruck (LPPS) aufgebracht. Die thermischen Ausdehnungskoeffizienten der einzelnen Schichten im Verhältnis zueinander für den Verbund, der die Legierung gemäß Beispiel 1a enthielt, zeigt Fig. 1. Darin steht die mit (1) bezeichnete Kurve für die Abhängigkeit des thermischen Ausdehnungskoeffizienten einer Legierung gemäß Beispiel 1(a) von der Temperatur, die mit (2) bezeichnete Kurve für die Abhängigkeit des thermischen Ausdehnungskoeffizienten eines plasmagespritzten, mit 7,2 Gew.-% Y₂O₃ teilstabilisierten Zirkonoxids von der Temperatur (Werte nach "P. Boch et al, Advances in Ceramics, Vol. 12, Science and Technology of Zirconia II, N. Claussen et al (ed.), Am. Ceram. Soc. Inc., 1984, p. 488-502") und der mit (3) bezeichnete Bereich für die Abhängigkeit des anisotropen thermischen Ausdehnungskoeffizienten einer gerichtet erstarrten¸ eutektischen Legierung aus 61,5 Gew.-% Nickel, 32,3 Gew.-% Molybdän und 6,2 Gew.-% Aluminium von der Temperatur.

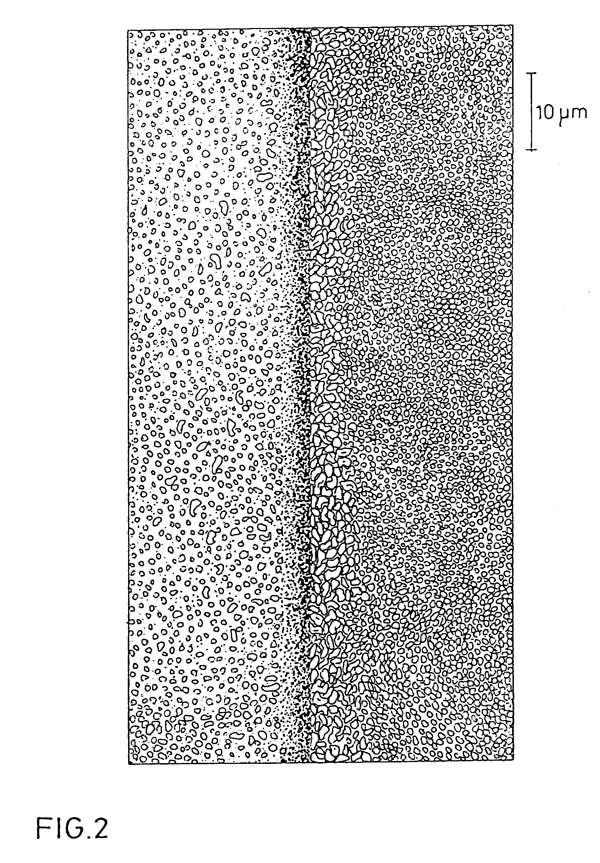

Die erhaltenen, mit einer zweischichtigen Wärmebarriereschicht versehenen Metallsubstrate wurden optisch untersucht. Das geringe Ausmaß der Interdiffusion zwischen der Legierungsschicht gemäß der Erfindung und der Nickellegierung des metallischen Substrats zeigt Fig. 2. Der metallographische Querschliff durch eine gerichtet erstarrte eutektische Legierung aus 61,5 Gew.-% Nickel, 32,3 Gew.-% Molybdän und 6,2 Gew.-% Aluminium (rechts) ist mit einer Legierungsschicht gemäß der Erfindung (Beispiel 1(a)) versehen, die auf das metallische Substrat aufgedampft worden war (links). Der so erhaltene Verbund war dann einem 100stündigen Wärmezyklus in einer Heißgaskorrosionsanlage unterworfen worden. Die Zyklen bestanden darin, daß der Verbund aus Substrat und Legierung gemäß der Erfindung jeweils 57 min bei 1173 K (900 °C) gehalten wurde und anschließend 3 Minuten mit Preßluft auf Raumtemperatur (293 K) abgekühlt wurde. Wie Fig. 2 deutlich zu entnehmen ist, ist zwischen beiden Legierungs-Verbundschichten die Ausbildung nur einer minimalen Interdiffusionsschicht zu erkennen, deren Dicke deutlich unter 10 µm liegt.

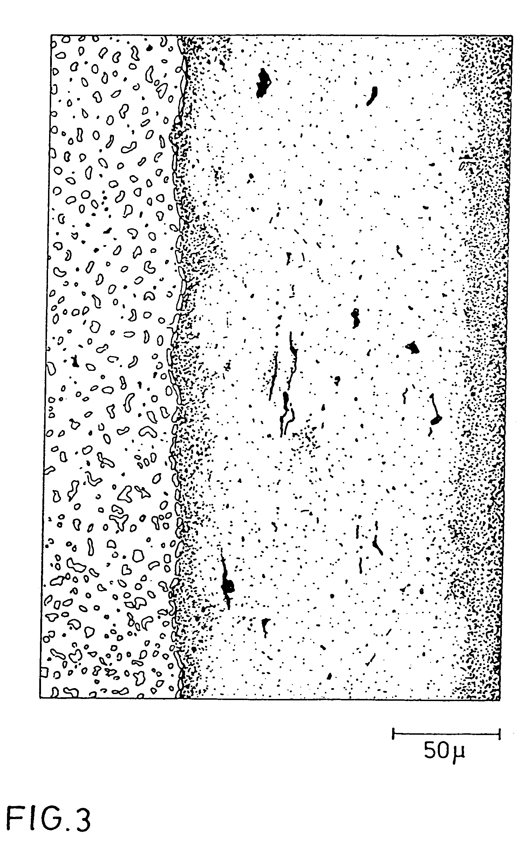

Die Oxidationsrate bei isothermen Glühversuchen an Luft bei 1173 und 1273 K (900 und 1000 °C) sowie bei zyklischen Oxidationsversuchen zwischen 873 und 1373 K (600 und 1100 °C) in 40 min-Zyklen lagen unter 0,5 mg/cm² . 100 h. Die Haftung und Interdiffusion zwischen plasmagespritzter Keramik und der erfindungsgemäß als Werkstoff verwendeten Legierung als Zwischenschicht einer Wärmebarriereschicht zeigt Fig. 3. Der in Fig. 3 gezeigte metallographische Querschliff durch einen Verbund aus Zirkonoxid (mit 7,2 Gew.-% Y₂O₃ stabilisiert) (rechts) und der Legierung des vorliegenden Beispiels 1(a) war 1000mal einem Aufheiz-und anschließenden Abkühlzyklus (jeweils 10 Minuten) zwischen Raumtemperatur und 1373 K (1100 °C) unterworfen worden. Fig. 3 zeigt deutlich, daß zwischen beiden Schichten des Verbundes nur geringe chemische Reaktionen stattgefunden haben, wobei die Diffusion von Komponenten der Keramikschicht in die benachbarte Legierungsschicht eingeschlossen sind. Ebenfalls wird die gute Haftung beider Materialien aneinander deutlich. Spannungsrisse in der keramischen Schicht fehlen ebenfalls.

### Beispiel 3

Aus einer gemäß Beispiel 1a erhaltenen Legierung, die gemäß Beispiel 2 nochmals einem Schmelzprozeß und Erstarrungsprozeß unterworfen war, wurde ein etwa 8 mm x 15 mm x 15 mm großer Quader getrennt, von diesem einen Fläche glattgeschliffen, diese Fläche durch Beglimmen mit einem Wasserstoffplasma im Vakuum gereinigt und dort etwa 0,5 µm stark mit Platin zur Vermeidung einer starken Gasaufnahme dieser Fläche besputtert. Ein etwa gleichgroßer Quader wurde aus einer Titanlegierung (84,89 Ti - 6,00 Al - 4,00 Sn - 3,50 Zr - 0,70 Nb - 0,50 Mo - 0,35 Si - 0,06 C in Gewichtsprozent) hergestellt und in gleicher Weise wie zuvor beschrieben geschliffen, glimmgereinigt und platinbeschichtet.

Für die Herstellung eines Verbundkörpers wurden die platinbeschichteten Flächen der beiden Quader aufeinandergelegt und zum Zwecke der Diffusionsverschweißung bei einem Anpressdruck von 20 Mega-Pascal (MPa) bei 1223 K (950 °C) 4 h vakuumgeglüht (vgl. Ausführungen zum Diffusionsschweißen vorstehend in der Beschreibung). Von dem Verbundkörper wurde ein metallographischer Querschliff angefertigt und die Verbindungszone des Verbundkörpers beurteilt. Diese Interdiffusionszone wurde als dicht angesehen und besaß eine Dicke von nur 8 µm. Diese Ergebnisse rechtfertigen den Einsatz der erfindungsgemäßen, als Werkstoff verwendeten Legierung für den Schutz gegen Oxidation und Heißgaskorrosion nicht nur von Nickelbasislegierungen, sondern auch von Titanbasislegierungen.

## Patentansprüche

1. Verwendung von Legierungen, bestehend aus:
52 bis 66 Gew.-% Nickel,
17 bis 38 Gew.-% Chrom,
3 bis 6 Gew.-% Aluminium,
4 bis 10 Gew.-% Titan und
2 bis 2,5 Gew.-% Silicium und
wahlweise 0,1 bis 2 Gew.-% in Summe von einem oder mehreren der Elemente Hf, Ta, W, Yt, Ce und Sm, wobei die Summe aller Legierungsbestandteile 100 Gew.-% beträgt mit einem thermischen Ausdehnungskoeffizienten α im Bereich von 12 bis 16. 10⁻⁶ . K⁻¹ zwischen 293 und 1370 K, als Werkstoff auf Substraten aus Nickelbasis- oder Titanbasislegierungen.

2. Verwendung von Legierungen nach Anspruch 1 zur Verbindung von keramischen Anionleitern mit Substraten aus Nickelbasislegierungen oder Titanbasislegierungen, insbesondere als Haftschicht für keramische Schutzschichten, die als Wärmebarriereschichten dienen, auf metallischen Substraten oder Cermet.

3. Verwendung nach Anspruch 1 als Heißgaskorrosionsschutzschicht.

4. Verfahren zur Herstellung von Legierungen aus
52 bis 66 Gew.-% Nickel,
17 bis 38 Gew.-% Chrom,
3 bis 6 Gew.-% Aluminium,
4 bis 10 Gew.-% Titan,
2 bis 2,5 Gew.-% Silicium und
wahlweise 0,1 bis 2 Gew.-% in Summe von einem oder mehreren der Elemente Hf, Ta, W, Yt, Ce und Sm, wobei die Summe aller Legierungsbestandteile 100 Gew.-% beträgt, mit einem thermischen Ausdehnungskoeffizienten α im Bereich von 12 bis 16 . 10⁻⁶K⁻¹ zwischen 293 und 1370 K dadurch gekennzeichnet, daß man
(a) Nickel, Chrom, Aluminium, Titan, Silicium und die wahlweise eingesetzten Legierungsbestandteile in feinverteilter Form mischt und gegebenenfalls legiert,
(b) ein Metallsubstrat oder gegebenenfalls ein Cermet-Substrat für die Aufbringung einer Legierung vorbereitet,
(c) die physikalische Mischung der feinverteilten Legierungskomponenten oder die Legierung bei erhöhter Temperatur in Form einer legierten Schicht auf das Metallsubstrat oder gegebenenfalls ein Cermet-Substrat aufbringt,
(d) die Legierung mechanisch verdichtet und/oder glättet und
(e) das legierungsbeschichtete Metallsubstrat oder gegebenenfalls ein Cermet-Substrat einer Temperaturbehandlung in Abwesenheit von Sauerstoff unterwirft.

5. Verfahren nach Anspruch 4, dadurch gekennzeichnet, daß man Mischungen in Pulverform herstellt.

6. Verfahren nach Anspruch 4, dadurch gekennzeichnet, daß man Mischungen gemäß Verfahrensschritt (a) herstellt und diese anschließend bei erhöhter Temperatur auf schmelzmetallurgischen Wegen legiert.

7. Verfahren nach Anspruch 6, dadurch gekennzeichnet, daß man die erhaltene Legierung zu einer Folie verarbeitet.

8. Verfahren nach Ansprüchen 4 bis 7, dadurch gekennzeichnet, daß man das Metallsubstrat durch Sandstrahlen aufrauht.

9. Verfahren nach Ansprüchen 4 bis 8, dadurch gekennzeichnet, daß man die Legierungen, erschmolzen aus den feinverteilten Legierungskomponenten auf das Metallsubstrat aufdampft.

10. Verfahren nach Ansprüchen 4 bis 8, dadurch gekennzeichnet, daß man feine Pulver der Legierungen im Wege des Plasmaspritzens auf das Metallsubstrat aufbringt.

11. Verfahren nach Ansprüchen 4 bis 8, dadurch gekennzeichnet, daß man feine Pulver der Legierungen im Wege des Detonationsbeschichtens auf das Metallsubstrat aufbringt.

12. Verfahren nach Ansprüchen 4 bis 8, dadurch gekennzeichnet, daß man die erhaltene Legierungsfolie im Wege des Diffusionsschweißens aufbringt.

13. Verfahren nach Ansprüchen 4 bis 12, dadurch gekennzeichnet, daß man die Legierung durch Glaskugelstrahlen verdichtet und/oder glättet.

14. Verfahren nach Ansprüchen 4 bis 13, dadurch gekennzeichnet, daß man das Metallsubstrat mit der aufgebrachten Legierungsschicht in einem Druck von 10-1 bis 10⁻⁴ mbar einer Temperaturbehandlung bei 1273 bis 1363 K unterwirft.

15. Verfahren zur Ausbildung einer stabilen Hochtemperatur-Oxidphase an der Phasengrenzfläche Metall-Legierung/Keramik bei Metall-Keramik-Verbundmaterialien nach Aufbringen der Keramik auf ein gegebenenfalls mehrschichtiges Metallsubstrat, dadurch gekennzeichnet, daß man die Metall-Keramik-Verbundmaterialien unter Verwendung der Legierungen gemäß einem oder mehreren der Ansprüche 1 bis 3 über 0,5 bis 5 h einer Glühbehandlung in oxidierender Atmosphäre unterwirft.

## Claims

1. Use of alloys consisting of
52 to 66% by weight of nickel,
17 to 38% by weight of chromium,
3 to 6% by weight of aluminum,
4 to 10% by weight of titanium and
2 to 2.5% by weight of silicon, and
optionally from 0.1 to 2 % by weight, as the sum, of one or more of the elements Hf, Ta, W, Yt, Ce and Sm, the sum of all of the alloy components being 100% by weight, which alloys have a coefficient of thermal expansion α within a range of from 12 to 16 · 10⁻⁶ K⁻¹ between 293 K and 1370 K, as a material on substrates made of alloys based on nickel or titanium.

2. Use according to claim 1 for bonding ceramic anion conductors to nickel-based alloys or titanium-based alloys, and more specifically as adhesion layer for ceramic protective layers serving as thermal barrier layers on metallic substrates or cermet.

3. Use according to claim 1 as a hot corrosion-resistant layer.

4. A process for preparing alloys comprising
52 to 66% by weight of nickel,
17 to 38% by weight of chromium,
3 to 6% by weight of aluminum,
4 to 10% by weight of titanium and
2 to 2.5% by weight of silicon, and
optionally from 0.1 to 2 % by weight, as the sum, of one or more of the elements Hf, Ta, W, Yt, Ce and Sm, the sum of all of the alloy components being 100% by weight, which alloys have a coefficient of thermal expansion α within a range of from 12 to 16 · 10⁻⁶ K⁻¹ between 293 K and 1370 K,
characterized in that
(a) nickel, chromium, aluminum, titanium and silicon and the alloy components optionally employed are mixed in a finely divided state and are optionally alloyed,
(b) a metal substrate or, if desired, a cermet substrate is prepared for the application of an alloy,
(c) the physical blend of the finely distributed alloy components or the alloy is applied at an elevated temperature in the form of an alloyed layer onto the metal substrate or, if desired, onto a cermet substrate,
(d) the alloy is mechanically compacted and/or flattened and
(e) the alloy-coated metal substrate or optionally a cermet substrate is subjected to a temperature treatment in the absence of oxygen.

5. The process according to claim 4, characterized in that mixtures in powder form are prepared.

6. The process according to claim 4, characterized in that mixtures are prepared according to process step (a) and are subsequently alloyed at an elevated temperature via a melt-metallurgical route.

7. The process according to claim 6, characterized in that the resulting alloy is processed into a foil.

8. The process according to claims 4 to 7, characterized in that the metal substrate is roughened by sand blasting.

9. The process according to claims 4 to 8, characterized in that the alloys which have been melted from the finely divided alloy components are vapor-deposited on the metal substrate.

10. The process according to claims 4 to 8, characterized in that the fine powders of the alloys are applied onto the metal substrate by plasma-spraying.

11. The process according to claims 4 to 8, characterized in that the fine powders of the alloys are applied onto the metal substrate by detonation gun coating.

12. The process according to claims 4 to 8, characterized in that the alloy foil obtained is applied by diffusion welding.

13. The process according to claims 4 to 12, characterized in that the alloy is compacted and/or flattened by glass bead blasting.

14. The process according to claims 4 to 13, characterized in that the metal substrate comprising the alloy layer applied thereonto is subjected to a temperature treatment at from 1273 K to 1363 K under a pressure of from 10⁻¹ to 10⁻⁴ mbar.

15. A process for forming a stable high-temperature oxide phase in metal/ceramics composite materials at the phase boundary surface metal alloy/ceramics after the ceramics have been applied onto a metal substrate which optionally comprises several metal layers, characterized in that the metal/ceramics composite materials are subjected to an annealing treatment in an oxidizing atmosphere for from 0.5 to 5 hours using the alloys according to anyone or several of claims 1 to 3.

## Revendications

1. Application d'alliages, consistant en :
52 à 66 % en poids de nickel,
17 à 38 % en poids de chrome,
3 à 6 % en poids d'aluminium,
4 à 10 % en poids de titane, et
2 à 2,5 % en poids du silicium, et
éventuellement 0,1 à 2 %, au total, d'un ou plusieurs des éléments Hf, Ta, W, Yt, Ce et Sm, la somme de tous les constituants de l'alliage valant 100 % en poids, les alliages ayant un coefficient de dilatation thermique, bdans la plage de 12 à 16. 10⁻⁶.K⁻¹ entre 293 et 1370 K, comme matériau sur des substrats en alliages à base de nickel ou à base de titane.

2. Application d'alliages selon la revendication 1 pour la liaison de conducteurs céramiques d'anions avec des substrats en alliages à base de nickel ou des alliages à base de titane, notamment comme couche d'adhérence pour des couches protectrices en une matière céramique, qui servent de couche de barrière thermique, sur des substrats métalliques ou sur du "Cermet" (matière céramique/métal).

3. Application selon la revendication 1 à titre de couche de protection contre la corrosion dûe à des gaz chauds.

4. Procédé de fabrication d'alliages consistant en:
52 à 66 % en poids de nickel,
17 à 38 % en poids de chrome,
3 à 6 % en poids d'aluminium,
4 à 10 % en poids de titane,
2 à 2,5 %en poids de silicium, et
éventuellement 0,1 à 2 %, au total, d'un ou plusieurs des éléments Hf, Ta, W, Yt, Ce et Sm, la somme de tous les constituants formant 100 % en poids, les alliages ayant un coefficient a de dilatation thermique dans la zone de 12 à 16. 10⁻⁶·K⁻¹ entre 293 et 1370 K, procédé caractérisé en ce que
(a) on mélange sous forme finement divisée, et éventuellement on allie, du nickel, du chrome, de l'aluminium, du titane, du silicium et les constituants d'alliages éventuellement utilisés,
(b) on prépare un substrat métallique ou éventuellement un substrat en "Cermet" (matière céramique/métal) en vue d'y appliquer un alliage,
(c) on applique le mélange physique des constituants finement répartis d'alliage, ou l'alliage, à température élevée, sous forme d'une couche alliée sur le substrat métallique ou éventuellement sur un substrat en "Cermet",
(d) on compacte mécaniquement l'alliage et/ou on le lisse ou polit, et
(e) on soumet le substrat métallique, ou éventuellement un substrat en "Cermet", revêtu de l'alliage, à un traitement thermique en l'absence d'oxygène.

5. Procédé selon la revendication 4, caractérisé en ce qu'on prépare des mélanges sous forme pulvérulente.

6. Procédé selon la revendication 4, caractérisé en ce qu'on produit des mélanges selon l'étape opératoire (a) et on les transforme ensuite en alliages, à température élevée et par des voies de métallurgie au fondu.

7. Procédé selon la revendication 6, caractérisé en ce qu'on transforme en une feuille l'alliage obtenu.

8. Procédé selon les revendications 4 à 7, caractérisé en ce qu'on rend rugueux le substrat métallique en le soumettant à du sablage.

9. Procédé selon les revendications 4 à 8, caractérisé en ce qu'on soumet le substrat métallique à une métallisation sous vide par application des alliages, obtenus par fusion des constituants d'alliages finement divisés.

10. Procédé selon les revendications 4 à 8, caractérisé en ce qu'on applique sur le substrat métallique de la fine poudre des alliages, à l'aide d'une pulvérisation par plasma.

11. Procédé selon les revendications 4 à 8, caractérisé en ce qu'on applique sur le substrat métallique une fine poudre des alliages à l'aide d'une opération de revêtement par détonation.

12. Procédé selon les revendications 4 à 8, caractérisé en ce qu'on soumet la feuille d'alliage obtenue à une application par soudage avec diffusion.

13. Procédé selon les revendications 4 à 12, caractérisé en ce qu'on compacte et/ou lisse l'alliage par projection de billes de verre.

14. Procédé selon les revendications 4 à 13, caractérisé en ce qu'on soumet le substrat métallique comportant la couche d'alliage appliquée sous une pression de 10⁻¹ à 10⁻⁴ mbar à un traitement thermique entre 1273 et 1363 K.

15. Procédé pour produire une phase d'oxyde stable aux températures élevées sur la surface limite de phase métal/alliage/matière céramique dans le cas de matériaux composites métal/céramique après application de la matière céramique sur un substrat métallique éventuellement en plusieurs couches, procédé caractérisé en ce qu'on soumet les matériaux composites métal/céramique, en utilisant les alliages selon une ou plusieurs des revendications 1 à 3, durant 0,5 à 5 heures à un traitement thermique en atmosphère oxydante.
